# EUROPEAN PATENT SPECIFICATION

(11) **EP 2 648 532 B1**
(45) Date of publication and mention of the grant of the patent: **03.07.2019**
(21) Application number: 10794944.8
(22) Date of filing: 08.12.2010
(51) Int. Cl.: A23D 7/005, A21D 13/00, A23P 20/25, A23L 7/10, A23L 7/104, A23L 33/22, A21D 13/38, A21D 13/36, A21D 13/32

(54) **COMPOSITE PRODUCT COMPRISING A FILLING COMPOSITION COMPRISING HYDROLYZED WHOLE GRAIN**
ZUSAMMENGESETZTES PRODUKT ENTHALTEND EINE FÜLLUNGSZUSAMMENSETZUNG MIT HYDROLYSIERTEM VOLLKORN
PRODUIT COMPOSITE COMPRENANT UNE COMPOSITION DE REMPLISSAGE COMPRENANT DES CÉRÉALES COMPLÈTES HYDROLYSÉES

(43) Date of publication of application: 16.10.2013
(73) Proprietor: Nestec S.A., 1800 Vevey (CH)
(72) Inventor: BOUVET, Yves, Santiago (CL); ROGER, Olivier, Yves, CH-1510 Moudon (CH); SCHAFFER-LEQUART, Christelle, CH-1083 Mezières (CH); WAVREILLE, Anne-Sophie, CH-1004 Lausanne (CH)
(74) Representative: Lumsden, Stuart Edward Henry
(86) International application number: PCT/EP2010/069223
(87) International publication number: WO 2012/076058

(56) References cited:
- EP-A1- 0 231 729
- WO-A1-2011/070057
- WO-A2-02/065855
- US-A- 5 686 123
- US-A1- 2010 112 127

## Description

### Technical field of the invention

The present invention relates to composite products comprising filling compositions being supplemented with whole grain. In particular the present invention relates to composite products comprising filling compositions which are supplemented with hydrolysed whole grain, where neither taste nor organoleptic properties of the filling compositions have been compromised.

### Background of the invention

There is now extensive evidence emerging mainly from epidemiological studies that a daily intake of three servings of whole grain products, i.e. 48 g of whole grain, is positively associated with decreased risk of cardiovascular diseases, increased insulin sensitivity and decreased risk of type 2 diabetes onset, obesity (mainly visceral obesity) and digestive system cancers. These health benefits of the whole grains are reported to be due to the synergistic role of the dietary fibres and other components, such as vitamins, minerals and bioactive phytochemicals.

The regulatory authorities in Sweden, the US and the UK have already approved specific heart health claims based on the available scientific substantiation.
Food products comprising dietary fibres are also growing in popularity with consumers, not just because whole grain consumption is now included in some national dietary recommendations but also because whole grain products are considered wholesome and natural. Recommendations for whole grain consumption have been set up by government authorities and expert groups to encourage consumers to eat whole grains. For instance, in the U.S.A, recommendations are to consume 45-80 g of whole grain per day. However, data provided by national dietary surveys in the United Kingdom, the U.S.A. and China show that whole grain consumption varies between 0 and 30 g whole grains per day.

The lack of whole grain products offered on the shelves and the poor organoleptic properties of the available whole grain products are generally identified as barriers for whole grain consumption and restrict the amount of whole grain to be added to e.g. a filling composition, because, when increased amounts of whole grain are added the physical and organoleptic properties of the filling composition change dramatically.

Whole grains are also a recognised source of dietary fibres, phytonutrients, antioxidants, vitamins and minerals. According to the definition given by the American Association of Cereal Chemists (AACC), whole grains, and food made from whole grains, consist of the entire grain seed. The entire grain seed comprises the germ, the endosperm and the bran. It is usually referred to as the kernel. Refined flour is made from the endosperm only, whereas whole grain component consists of all the parts of the whole grain in the same proportions as in the original grain.

Moreover, in recent years, consumers have paid increasing attention to the labelling of food products, e.g. filling compositions, and they expect manufactured food products to be as natural and healthy as possible. Therefore, it is desirable to develop food and drink processing technologies and food and drink products that limit the use of non-natural food additives, even when such non-natural food additives have been fully cleared by health or food safety authorities. This increasing desire that manufactured filling compositions be as natural and healthy as possible makes it desirable also to be able to reduce the amount of added sugars or other sweeteners, without compromising on the taste of the food product.

Given the health benefits of whole grain cereal, it is desirable to provide a whole grain ingredient having as much intact dietary fibres as possible. Filling compositions are a good vehicle for delivering whole grain. To increase the whole grain content of a serving, it is of course possible to increase the serving size. But this is not desirable as it results in a greater calorie intake, unless compensated by reductions in intake from other foods. An alternative approach is to substitute refined flour with whole grain flour in products made with flour, or to increase the relative amount of whole grain flour in a recipe. The difficulty in just increasing the whole grain content of a product or replacing the refined flour with whole grain flour is that this usually impacts on the physical properties such as the taste, texture and the overall appearance of the filling compositions (organoleptic parameters). Also the replacement of refined flour by whole grain flour, or increase of the whole grain flour in the recipe, can have a negative impact on processability, such as increasing the viscosity of the filling composition.

The consumer is not willing to compromise on the organoleptic properties of filling compositions, in order to increase his daily whole grain intake. Taste, texture and overall appearance are such organoleptic properties.

The texture of filling compositions made with whole grain can be improved to some extent by micronising the bran component of the whole grain, or by the use of a recombined/reconstituted whole grain, by using a refined flour combined with heat treated bran and germ. However, the proportion of such a whole grain flour that can be used in a filling composition without significantly impacting the organoleptic properties is still low.

Obviously, industrial line efficiency is a mandatory requirement in the food industry. This includes handling and processing of raw materials, forming of the filling compositions, packaging and later storing, in warehouses, on the shelf or at home.

US 4,282,319 relates to a process for the preparation of hydrolyzed products from whole grain, and such derived products. The process includes an enzymatic treatment in an aqueous medium with a protease and an amylase. The obtained product may be added to different types of products. US 4,282,319 describe a complete degradation of the proteins present in the whole grain.

US 5,686,123 discloses a cereal suspension generated by treatment with both an alpha-amylase and a beta-amylase both specifically generating maltose units and have no glucanase effect.

WO 02/065855 A2 discloses ready-to-use milk substitute cereal dispersions having intact beta-glucans, proteins and natural sugar, made by enzymatic hydrolysis.

It is an object of the present invention to provide food products that are rich in whole grains and in dietary fibers, that provide an excellent consumption experience to the consumer, and that may be easily industrialised at a reasonable cost without compromising the organoleptic parameters.

It would be advantageous to provide food products which have a reduced amount of added sugar, non-sugar sweetener, or artificial sweetener, in particular added sugars, whilst at the same time not compromising organoleptic parameters, particularly the taste, of the product.

### Summary of the invention

Accordingly, in a first aspect the invention relates to a composite product comprising a filling composition comprising
- a fat content above 15% by weight of the filling composition; and
- a hydrolyzed whole grain composition which is enzymatically digested whole grain components or a whole grain component digested by using at least an alpha-amylase, which alpha-amylase shows no hydrolytic activity towards dietary fibres when in the active state and a protease, which protease shows no hydrolytic activity towards dietary fibres when in the active state, wherein the whole grain component or components comprise the germ, the endosperm and the bran of grain, the hydrolyzed whole grain composition has a beta-glucan structure at least 95% intact relative to the starting material and which has an arabinoxylan structure at least 95% intact relative to the starting material;
- and the hydrolyzed whole grain composition is prepared by a process comprising the steps of:
   a) contacting a whole grain component with an enzyme composition in water, the enzyme composition comprising at least one alpha-amylase and a protease, said enzyme composition showing no hydrolytic activity towards dietary fibres and the composition does not comprise a beta-amylase,
   b) allowing the enzyme composition to react with the whole grain component, to provide a whole grain hydrolysate,
   c) providing the hydrolyzed whole grain composition by inactivating said enzymes when said hydrolysate has reached a viscosity comprised between 50 and 5000 mPa.s, when measured at 65 deg C and 50 rpm, after 10 mins stirring; and
wherein the filling composition is provided by mixing the hydrolyzed whole grain composition with a fat content above 15% by weight of the filling composition and wherein the filling composition has a maltose to glucose ratio below 144:1 by weight of the filling composition.

Another aspect of the present invention relates to a process for preparing a process for preparing a composite product comprising a filling composition according to any of claims 1-6, said process comprising:
- preparing a hydrolyzed whole grain composition, comprising the steps of:
   a) contacting a whole grain component with an enzyme composition in water, the enzyme composition comprising at least one alpha-amylase and a protease, said enzyme composition showing no hydrolytic activity towards dietary fibres and the composition does not comprise a beta-amylase,
   b) allowing the enzyme composition to react with the whole grain component, to provide a whole grain hydrolysate,
   c) providing the hydrolyzed whole grain composition by inactivating said enzymes when said hydrolysate has reached a viscosity comprised between 50 and 5000 mPa.s, when measured at 65 deg C and 50 rpm, after 10 mins stirring;
providing the filling composition by mixing the hydrolyzed whole grain composition with a fat content above 15% by weight of the filling composition.

### Brief description of the drawings

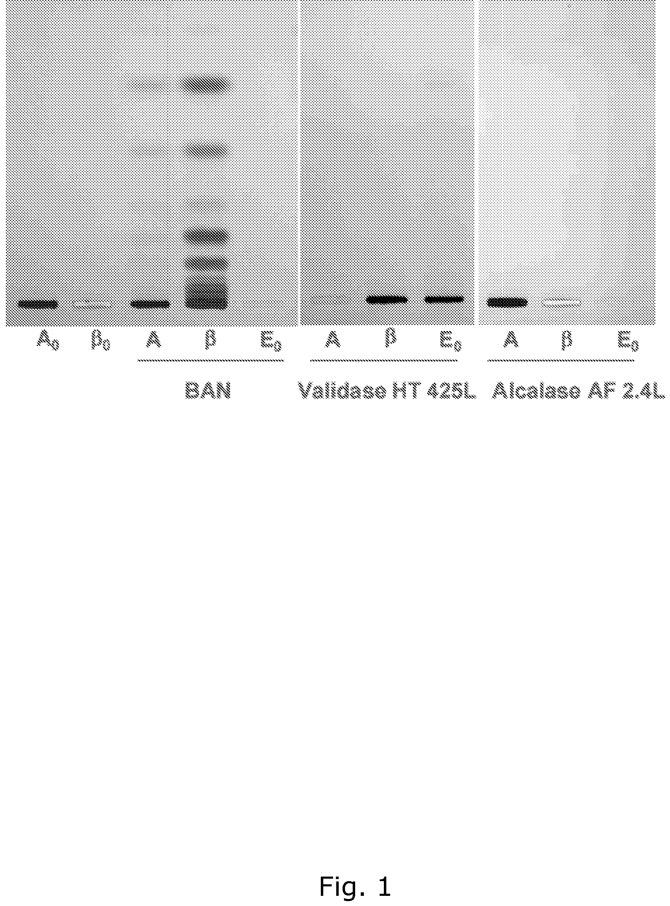

Figure 1 shows a thin layer chromatography analysis of various enzymes put in contact with dietary fibres. The legend for the different tracks is the following:
   A0: pure arabinoxylan spot (blank)
   β0: pure beta-glucan spot (blank)
   A: arabinoxylan spot after incubation with the enzyme noted below the track (BAN, Validase HT 425L and Alcalase AF 2.4L)
   β: beta-glucan spot after incubation with the enzyme noted below the track (BAN, Validase HT 425L and Alcalase AF 2.4L)
   E0: enzyme spot (blank)
Figure 2 shows size exclusion chromatography (SEC) of β-Glucan and arabinoxylanmolecular weight profile without enzyme addition (plain line) and after incubation with Alcalase 2.4L (dotted line). A) Oat β-glucan; B) Wheat arabinoxylan.
Figure 3 shows size exclusion chromatography (SEC) of β-Glucan and arabinoxylan molecular weight profile without enzyme addition (plain line) and after incubation with Validase HT 425L (dotted line). A) Oat β-glucan; B) Wheat arabinoxylan.
Figure 4 shows size exclusion chromatography (SEC) of β-Glucan and arabinoxylan molecular weight profiles without enzyme addition (plain line) and after incubation with MATS L (dotted line). A) Oat β-glucan; B) Wheat arabinoxylan.

### Detailed description of the invention

The inventors of the present invention have surprisingly found that by treating the whole grain component with an alpha-amylase and optionally with a protease and increased amount of whole grains may be added to the filling composition compared to using non-enzymatically treated whole grains. Furthermore, the alpha-amylase treatment may also results in a reduced need for adding sweetener such as sucrose to the filling composition. These benefits may be achieved without compromising the organoleptic parameters of the filling composition.

Thus in a first aspect the invention relates to a composite product comprising a filling composition comprising
- a fat content above 15% by weight of the filling composition; and
- a hydrolyzed whole grain composition which is enzymatically digested whole grain components or a whole grain component digested by using at least an alpha-amylase, which alpha-amylase shows no hydrolytic activity towards dietary fibres when in the active state and a protease, which protease shows no hydrolytic activity towards dietary fibres when in the active state, wherein the whole grain component or components comprise the germ, the endosperm and the bran of grain, the hydrolyzed whole grain composition has a beta-glucan structure at least 95% intact relative to the starting material and which has an arabinoxylan structure at least 95% intact relative to the starting material;
- and the hydrolyzed whole grain composition is prepared by a process comprising the steps of:
   a) contacting a whole grain component with an enzyme composition in water, the enzyme composition comprising at least one alpha-amylase and a protease, said enzyme composition showing no hydrolytic activity towards dietary fibres and the composition does not comprise a beta-amylase,
   b) allowing the enzyme composition to react with the whole grain component, to provide a whole grain hydrolysate,
   c) providing the hydrolyzed whole grain composition by inactivating said enzymes when said hydrolysate has reached a viscosity comprised between 50 and 5000 mPa.s, when measured at 65 deg C and 50 rpm, after 10 mins stirring; and
wherein the filling composition is provided by mixing the hydrolyzed whole grain composition with a fat content above 15% by weight of the filling composition and wherein the filling composition has a maltose to glucose ratio below 144:1 by weight of the filling composition.

Several advantages of having a filling comprising a hydrolyzed whole grain composition according to the invention may exist:
I. An increase in whole grain and fiber content may be provided in the final product, while the organoleptic parameters of the product are substantially not affected;
II. Dietary fibres from the whole grain may be preserved, thereby the health benefits of whole grain are maintained, without negatively affecting the organoleptic properties of the filling compositions;
III. A slower digestion and a greater sense of satiety substantially without affecting the organoleptic parameters of the product. Currently, there are limitations for enriching filling compositions with whole grain due to grainy texture, and taste issues. However, the use of hydrolyzed whole grain according to the present invention in filling compositions allows for providing a smooth texture, minimal flavor impact, and added nutritional health and wellness values;
IV. An additional advantage may be to reduce the amount of added external sugar in the filling composition, by replacement of all or a proportion of the traditional externally supplied sweeteners such as glucose syrup, high fructose corn syrup, invert syrup, maltodextrine, sucrose, fiber concentrate, inulin, etc.

In the present context the term "filling composition" relates to a pre-prepared composition to be used as one part of a composite product. The filling and the other part(s) of the composite product are composed of different components. Preferably, the filling is surrounded by the other part(s) of the composite product.

The whole grain component may be obtained from different sources. Examples of whole grain sources are semolina, cones, grits, flour and micronized grain (micronized flour). The whole grains may be grinded (milled), preferably by dry milling. Such milling preferably takes place before the whole grain component is contacted with the enzyme composition according to the invention.

In an embodiment of the present invention the whole grain component may be heat treated to limit rancidity and microbial count.

Whole grains are non-processed cereals of monocotyledonous plants of the Poaceae family (grass family) cultivated for their edible, starchy grains. Examples of whole grain cereals include barley, rice, black rice, brown rice, wild rice, maize, millet, oat, sorghum, spelt, triticale, rye, wheat, teff, canary grass, Job's tears and fonio. Plant species that do not belong to the grass family but which also produce starchy seeds or fruits that may be used in the same way as cereal grains, are called pseudo-cereals. Examples of pseudo-cereals include amaranth, buckwheat, tartar buckwheat and quinoa. When designating cereals, this will include both cereal and pseudo-cereals.

Thus, the whole grain component according to the invention may originate from a cereal or a pseudo-cereal. Thus, in an embodiment the hydrolyzed whole grain composition is obtained from a plant selected from the group consisting of barley, rice, brown rice, wild rice, black rice, buckwheat, bulgur, corn, millet, oat, sorghum, spelt, triticale, rye, wheat, wheat berries, teff, canary grass, Job's tears, fonio, amaranth, buckwheat, tartar buckwheat, quinoa, other variety of cereals and pseudo-cereals and mixtures thereof. In general the source of grain used in a recipe depends on the desired product type, since each grain will provide its own taste profile and processing characteristics.

Whole grain components are components made from unrefined cereal grains. Whole grain components comprise the entire edible parts of a grain; i.e. the germ, the endosperm and the bran. Whole grain components may be provided in a variety of forms such as ground, flaked, cracked or other forms, as is commonly known in the milling industry.

In the present context the phrasing "a hydrolyzed whole grain composition" refers to enzymatically digested whole grain components or a whole grain component digested by using at least an alpha-amylase, which alpha-amylase shows no hydrolytic activity towards dietary fibres when in the active state. The hydrolyzed whole grain composition may be further digested by the use of a protease, which protease shows no hydrolytic activity towards dietary fibres when in the active state.

In the present context it is also to be understood that the phrase "a hydrolyzed whole grain composition" is also relating to enzymatic treatment of flour and subsequent reconstitution of the whole grain by blending flour, bran and germ. It is also to be understood that reconstitution may be done before the use in the final product or during mixing in a final product. Thus, reconstitution of whole grains after treatment of one or more of the individual parts of the whole grain also forms part of the present invention.

After grinding of the whole grain, the whole grain component is subjected to a hydrolytic treatment in order to break down the polysaccharide structure and optionally the protein structure of the whole grain component.

The hydrolyzed whole grain composition may be provided in the form of a liquid, a concentrate, a powder, a juice or a puree. If more than one type of enzyme is used it is to be understood that the enzymatic processing of the whole grains may be performed by sequential addition of the enzymes, or by providing an enzyme composition comprising more than one type of enzyme.

In the present context the phrase "an enzyme showing no hydrolytic activity towards dietary fibres when in the active state" should be understood as also encompassing the enzyme mixture from which the enzyme originates. For example, the proteases, amylases, glucose isomerase and amyloglucosidase described in the present context may be provided as an enzyme mixture before use which is not completely purified and thus, comprise enzymatic activity towards e.g. dietary fibres. However, the activity towards dietary fibres may also come from the specific enzyme if the enzyme is multi-functional. As used in here, the enzymes (or enzyme mixtures) are devoid of hydrolytic activity towards dietary fibres.

The term "no hydrolytic activity" or "devoid of hydrolytic activity towards dietary fibres" may encompass up to 5% degradation of the dietary fibres, such as up to 3%, such as up to 2% and such as up to 1% degradation. Such degradation may be unavoidable if high concentrations or extensive incubation times are used.

The term "In the active state" refers to the capability of the enzyme or enzyme mixture to perform hydrolytic activity, and is the state of the enzyme before it is inactivated. Inactivation may occur both by degradation and denaturation.

In general the weight percentages throughout the application are given as percentage by weight on a dry matter basis unless otherwise stated.

The filling composition for use in the invention comprises a protease which shows no hydrolytic activity towards dietary fibres when in the active state. The advantage of adding a protease according to the invention is that the viscosity of the hydrolyzed whole grain may be further lowered, which may also result in a decrease in the viscosity of the final filling compositions. Thus, in an embodiment according to the invention the filling composition comprises said protease or fragment thereof at a concentration of 0.0001 to 5% (w/w) by weight of the total whole grain content, such as 0.01-3%, such as 0.01-1%, such as 0.05-1%, such as 0.1-1%, such as 0.1-0.7%, or such as 0.1-0.5%. The optimal concentration of added proteases depends on several factors. As it has been found that the addition of protease during production of the hydrolyzed whole grain may result in a bitter off-taste, addition of protease may be considered as a tradeoff between lower viscosity and off-taste. In addition the amount of protease may also depend on the incubation time during production of the hydrolyzed whole grain. For example a lower concentration of protease may be used if the incubation time is increased.

Proteases are enzymes allowing the hydrolysis of proteins. They may be used to decrease the viscosity of the hydrolyzed whole grain composition. Alcalase 2.4L (EC 3.4.21.62), from Novozymes is an example of a suitable enzyme.

Depending on the incubation time and concentration of protease a certain amount of the proteins from the hydrolyzed whole grain component may be hydrolyzed to amino acid and peptide fragments. Thus, in an embodiment 1-10% of the proteins from the whole grain composition is hydrolyzed, such as 2-8%, e.g. 3-6%, 10-99%, such as 30-99%, such as 40-99%, such as 50-99%, such as 60-99%, such as 70-99%, such as 80-99%, such as 90-99%, or such as 10-40%, 40-70%, and 60-99%. Again protein degradation may result in a lowered viscosity and improved organoleptic parameters.

In the present context the phrase "hydrolyzed protein content" refers to the content of hydrolyzed protein from the whole grain composition unless otherwise defined. The protein may be degraded into larger or smaller peptide units or even into amino acid components. The person skilled in the art will know that during processing and storage a small amount of degradation will take place which is not due to external enzymatic degradation.

In general it is to be understood that the enzymes used in the production of the hydrolyzed whole grain composition (and therefore also present in the final product) are different from the corresponding enzymes naturally present in the whole grain component.

Since the filling composition for use in the invention may also comprise proteins from sources different from the hydrolyzed whole grain component, which are not degraded, it may be appropriate to evaluate the protein degradation on more specific proteins present in the whole grain composition. Thus, in an embodiment the degraded proteins are whole grain proteins, such as gluten proteins, globulins, albumins and glycoproteins.

Amylase (EC 3. 2. 1. 1) is an enzyme classified as a saccharidase: an enzyme that cleaves polysaccharides. It is mainly a constituent of pancreatic juice and saliva, needed for the breakdown of long-chain carbohydrates such as starch, into smaller units. Here, alpha-amylase is used to hydrolyse gelatinized starch in order to decrease the viscosity of the hydrolyzed whole grain composition. Validase HT 425L, Validase RA from Valley Research, Fungamyl from Novozymes and MATS from DSM are examples of alpha-amylases suitable for the present invention. Those enzymes show no activity towards the dietary fibres in the processing conditions used (duration, enzyme concentrations). On the contrary, e.g. BAN from Novozymes degrades dietary fibres besides starch into low molecular weight fibres or oligosaccharides, see also example 3.

In an embodiment of the present invention the enzymes show no activity towards the dietary fibres when the enzyme concentration is below 5% (w/w), such as below, 3% (w/w), e.g. below 1% (w/w), such as below 0.75% (w/w), e.g. below 0.5% (w/w).

Some alpha-amylases generate maltose units as the smallest carbohydrate entities, whereas others are also able to produce a fraction of glucose units. Thus, in an embodiment the alpha-amylase or fragments thereof is a mixed sugar producing alpha-amylase, including glucose producing activity, when in the active state. It has been found that some alpha-amylases comprise glucose producing activity whilst having no hydrolytic activity towards dietary fibres when in the active state. By having an alpha-amylase which comprises glucose producing activity an increased sweetness may be obtained, since glucose has almost twice the sweetness of maltose. In an embodiment of the present invention a reduced amount of external sugar source needs to be added separately to the filling composition when a hydrolysed whole grain composition according to the present invention is used. When an alpha-amylase comprising glucose producing activity is used in the enzyme composition, it may become possible to dispense with or at least reduce the use of other external sugar sources or non-sugar sweeteners.

In the present context the term "external sugar source" relates to sugars, non-sugar sweeteners and artificial sweeteners not originally present or originally generated in the hydrolysed whole grain composition. Examples of such external sugar source could be sucrose, fructose, glucose, lactose, honey, high fructose corn syrup and artificial sweeteners or polyols.

Amyloglucosidase (EC 3.2.1.3) is an enzyme able to release glucose residues from starch, maltodextrins and maltose by hydrolysing glucose units from the nonreduced end of the polysaccharide chain. The sweetness of the preparation increases with the increasing concentration of released glucose. Thus, in an embodiment the filling composition further comprises an amyloglucosidase or fragments thereof. It may be advantageous to add an amyloglucosidase to the production of the hydrolyzed whole grain composition, since the sweetness of the preparation increases with the increasing concentration of released glucose. It may also be advantageous if the amyloglucosidase did not influence health properties of the whole grains, directly or indirectly. Thus, in an embodiment the amyloglucosidase shows no hydrolytic activity towards dietary fibres when in the active state. An interest of the invention, and particularly of the process for preparing the filling composition for use in the invention, is that it allows reducing the sugar (e.g. sucrose) content of the filling composition when compared to products described in the prior art. When an amyloglucosidase is used in the enzyme composition, it may become possible to dispense with other external sugar sources e.g. the addition of sucrose.

However, as mentioned above certain alpha-amylases are able to generate glucose units, which may add enough sweetness to the product making the use of amyloglucosidase unnecessary. Furthermore, application of amyloglucosidase also increases production costs of the filling composition and, hence, it may be desirable to limit the use of amyloglucosidases. Thus, in yet another embodiment the filling composition for use in the invention does not comprise an amyloglucosidase such as an exogenic amyloglucosidase.

Glucose isomerase (D-glucose ketoisomerase) causes the isomerization of glucose to fructose. Thus, in an embodiment of the present invention the filling composition further comprises a glucose isomerase or fragments thereof, which glucose isomerase or fragments thereof show no hydrolytic activity towards dietary fibres when in the active state. Glucose has 70-75% the sweetness of sucrose, whereas fructose is almost twice as sweet as sucrose. Thus, processes for the manufacture of fructose are of considerable interest because the sweetness of the product may be significantly increased without the addition of an external sugar source (such as sucrose or artificial sweetening agents).

A number of specific enzymes or enzyme mixtures may be used for production of the hydrolyzed whole grain composition according to the invention. The requirement is that they show substantially no hydrolytic activity in the process conditions used towards dietary fibres. Thus, in an embodiment the alpha-amylase may be selected from Validase HT 425L and Validase RA from Valley Research, Fungamyl from Novozymes and MATS from DSM, the protease may be selected from the group consisting of Alcalase, iZyme B and iZyme G (Novozymes).

The concentration of the enzymes according to the invention in the filling composition may influence the organoleptic parameters of the filling composition. The concentration of enzymes may be adjusted by changing parameters such as temperature and incubation time. Thus, in an embodiment filling composition comprises 0.0001 to 5% by weight of the total whole grain content in the filling composition of at least one of:
- an alpha-amylase or fragments thereof, which alpha-amylase or fragment thereof shows no hydrolytic activity towards dietary fibres when in the active state;
- an amyloglucosidase or fragments thereof, which amyloglucosidase shows no hydrolytic activity towards dietary fibres when in the active state; and
- a glucose isomerase or fragments thereof, which amyloglucosidase shows no hydrolytic activity towards dietary fibres when in the active state.

In yet another embodiment the filling composition comprises 0.001 to 3% of the alpha-amylase by weight of the total whole grain content in the filling composition, such as 0.01-3%, such as 0.01-0.1%, such as 0.01-0.5%, such as 0.01-0.1%, such as 0.03-0.1%, such as 0.04-0.1%. In yet another embodiment the filling composition comprises 0.001 to 3% of the amyloglucosidase by weight of the total whole grain content in the filling composition, such as 0.001-3%, such as 0.01-1%, such as 0.01-0.5%, such as 0.01-0.5%, such as 0.01-0.1%, such as 0.03-0.1%, such as 0.04-0.1%. In another further embodiment the filling composition comprises 0.001 to 3% of the glucose isomerase by weight of the total whole grain content in the filling composition, such as 0.001-3%, such as 0.01-1%, such as 0.01-0.5%, such as 0.01-0.5%, such as 0.01-0.1%, such as 0.03-0.1%, such as 0.04-0.1%.

Beta-amylases are enzymes which also break down saccharides, however beta-amylases mainly have maltose as the smallest generated carbohydrate entity. Thus, the filling composition for use in the invention does not comprise a beta-amylase, such as an exogenic beta-amylase. By avoiding beta-amylases a larger fraction of the starches will be hydrolyzed to glucose units since the alpha amylases do have to compete with the beta-amylases for substrates. Thus, an improved sugar profile may be obtained. This is in contrast to US 5,686,123 which discloses a cereal suspension generated by treatment with both an alpha-amylase and a beta-amylase.

In general the enzymes used according to the present invention for producing the hydrolyzed whole grain composition show no hydrolytic activity towards dietary fibres when in the active state. Thus, in a further embodiment the hydrolyzed whole grain composition has a substantial intact beta-glucan structure relative to the starting material. In yet a further embodiment the hydrolyzed whole composition has a substantial intact arabinoxylan structure relative to the starting material. By using the one or more enzymes according to the invention for the production of the hydrolyzed whole grain composition, a substantial intact beta-glucan and arabinoxylan structure may be maintained. The degree of degradation of the beta-glucan and arabinoxylan structures may be determined by Size-exclusion chromatography (SEC). This SEC technique has been described in more detail in "Determination of beta-Glucan Molecular Weight Using SEC with Calcofluor Detection in Cereal Extracts Lena Rimsten, Tove Stenberg, Roger Andersson, Annica Andersson, and Per Åman. Cereal Chem. 80(4):485-490", which is hereby incorporated by reference.

In the present context the phrase "substantial intact structure" is to be understood as for the most part the structure is intact. However, due to natural degradation in any natural product, part of a structure (such as beta-glucan structure or arabinoxylan structure) may be degraded although the degradation may not be due to added enzymes. Thus, "substantial intact structure" is to be understood that the structure is at least 95% intact, such as at least 97%, such as at least 98%, or such as at least 99% intact.

In the present context enzymes such as proteases, amylases, glucose isomerases and amyloglucosidases refer to enzymes which have been previously purified or partly purified. Such proteins/enzymes may be produced in bacteriam fungi or yeast, however they may also have plant origin. In general such produced enzymes will in the present context fall under the category "exogenic enzymes". Such enzymes may be added to a product during production to add a certain enzymatic effect to a substance. Similar, in the present context, when an enzyme is disclaimed from the present invention such disclaimer refers to exogenic enzymes. In the present context such enzymes e.g. provide enzymatic degradation of starch and proteins to decrease viscosity. In relation to the process of the invention it is to be understood that such enzymes may both be in solution or attached to a surface, such as immobilized enzymes. In the latter method the proteins may not form part of the final product.

As mentioned earlier, the action of the alpha-amylase results in a useful sugar profile which may affect taste and reduce the amount of external sugar or sweetener to be added to the final product.

In an embodiment of the present invention the hydrolyzed whole grain composition has a glucose content of at least 0.25% by weight of the hydrolyzed whole grain composition, on a dry matter basis, such as at least 0.35%, e.g. at least 0.5%.

Depending on the specific enzymes used the sugar profile of the final product may change. Thus, the filling composition has a maltose to glucose ratio below 144:1, by weight in the product, such as below 120:1, such as below 100:1 e.g. below 50:1, such as below 30:1, such as below 20:1 or such as below 10:1.

If the only starch processing enzyme used is a glucose generating alpha-amylase, a larger fraction of the end product will be in the form of glucose compared to the use of an alpha-amylase specifically generating maltose units. Since glucose has a higher sweetness than maltose, this may result in that the addition of a further sugar source (e.g. sucrose) can be dispensed with. This advantage may be more pronounced if the ratio is lowered by the conversion of the maltose present in the hydrolyzed whole grain to glucose (one maltose unit is converted to two glucose units).

The maltose to glucose ratio may be further lowered if an amyloglucosidase is included in the enzyme composition since such enzymes also generates glucose units.

If the enzyme composition comprises an glucose isomerase a fraction of the glucose is changed to fructose which has an even higher sweetness than glucose. Thus, in an embodiment the filling composition has a maltose to glucose + fructose ratio below 144:1 by weight in the product, such as below 120:1, such as below 100:1 e.g. below 50:1, such as below 30:1, such as below 20:1 or such as below 10:1.

Furthermore, in an embodiment of the present invention the filling composition may have a maltose to fructose ratio below 230:1 by weight in the product, such as below 144:1, such as below 120:1, such as below 100:1 e.g. below 50:1, such as below 30:1, such as below 20:1 or such as below 10:1.

In the present context the phrasing "total content of the whole grain" is to be understood as the combination of the content of "hydrolyzed whole grain composition" and "solid (non-hydrolyzed) whole grain content". If not indicated otherwise, "total content of the whole grain" is provided as % by weight in the final product. In an embodiment the filling composition has a total content of the whole grain in the range of 0.1-40% by weight of the filling composition, such as 1-40%, such as 5-40%, such as 5-30%, such as 5-20%, such as 5-15%.

In the present context the phrasing "content of the hydrolyzed whole grain composition" is to be understood as the % by weight on a dry matter basis in the final product that is derived from whole grains that has been hydrolyzed. Hydrolyzed whole grain composition content is part of the total content of the whole grain composition. Thus, in an embodiment the filling composition for use in the invention has a content of the hydrolyzed whole grain composition in the range 1-30% by weight of the filling composition, such as 1-20%, such as 1-10% and such as 1-5%. The amount of the hydrolyzed whole grain composition in the final product may depend on the type of product. By using the hydrolyzed whole grain composition according to the invention in a filling composition, a higher amount of hydrolyzed whole grains may be added (compared to a non-hydrolyzed whole grain composition) without substantially affecting the organoleptic parameters of the product because of the increased amount of soluble fibres in the hydrolysed whole grain.

It would be advantageous to have a filling composition comprising a high content of dietary fibres without compromising the organoleptic parameters of the product. Thus, in yet another embodiment the filling composition has a content of dietary fibres in the range of 0.1-10% by weight of the filling composition, preferably, in the range of 0.5-4%, even more preferably in the range of 1-2%. A filling composition for use in the invention may be provided with high amounts of dietary fibres by the addition of the hydrolyzed whole grain component provided by the present invention. This may be done due to the unique setup of the process according to the present invention.

Dietary fibres are the edible parts of plants that are not broken down by digestion enzymes. Dietary fibres are fermented in the human large intestine by the microflora. There are two types of fibres: soluble fibres and insoluble fibres. Both soluble and insoluble dietary fibres can promote a number of positive physiological effects, including a feeling of fullness, or a good transit through the intestinal tract which helps to prevent constipation. Health authorities recommend a consumption of between 20 and 35 g per day of fibres, depending on the weight, gender, age and energy intake.

Soluble fibres are dietary fibres that undergo complete or partial fermentation in the large intestine. Examples of soluble fibres from cereals include beta-glucans, arabinoxylans, arabinogalactans and resistant starch type 2 and 3, and oligosaccharides deriving from the latters. Soluble fibres from other sources include pectins, acacia gum, gums, alginate, agar, polydextrose, inulins and galacto-oligosaccharides for instance. Some soluble fibres are called prebiotics, because they are a source of energy for the beneficial bacteria (e.g. Bifidobacteria and Lactobacilli) present in the large intestine. Further benefits of soluble fibres include blood sugar control, which is important in diabetes prevention, control of cholesterol, or risk reduction of cardiovascular disease.

Insoluble fibres are the dietary fibres that are not fermented in the large intestine or only slowly digested by the intestinal microflora. Examples of insoluble fibres include celluloses, hemicelluloses, resistant starch type 1 and lignins. Benefits of insoluble fibres include promotion of the bowel function through stimulation of the peristalsis, which causes the muscles of the colon to work more, become stronger and function better. There is also evidence that consumption of insoluble fibres may be linked to a reduced risk of gut cancer.

The total moisture content of the filling composition for use in the invention may vary. Thus, in another embodiment the total moisture content in the range of 0.5 to 29% water, such as 0.5-20%, such as 0.5-10%, such as 0.5-5% and such as 0.5-1.5%. Examples of factors influencing the moisture content may be the amount of the hydrolyzed whole grain composition and the degree of hydrolysis in this composition. In the present context the phrasing "total solid content" equals 100 minus moisture content (%) of the product.

It would be advantageous if a filling composition with good organoleptic parameters, such as sweetness, could be obtained without addition of large amounts of external sweetener sources. Thus, in another embodiment the the filling composition has a content of sugar, a non-sugar sweetener or artificial sweetener of less than 40% by weight of the filling composition, such as less than 35%, such as less than 30%, such as less than 25%, such as less than 20%, such as less than 15%, such as less than 10%, less than 7%, less than 5%, less than 3%, or even less than 1%. Since the hydrolyzed whole grain composition supplements the filling composition with a source of carbohydrates, such as glucose and maltose, the filling composition is also sweetened from a natural sugar source different from the external sugar source. Thus, the amount of added external sweetener may be limited.

In an embodiment of the present invention the external sweetener may be sugar, non-sugar sweetener, artificial sweetener or any combination thereof.

Some sugar substitutes are natural and some are synthetic. Those that are not natural may in general be called artificial sweeteners. Artificial sweeteners include, but are not limited to stevia, aspartame, sucralose, neotame, acesulfame potassium, and saccharin.

Non-sugar sweeteners may be e.g. polyols, also known as "sugar alcohols." These are, in general, less sweet than sucrose, but have similar bulk properties.

In a further embodiment the sugar is a monosaccharide, a disaccharide or a combination thereof. In another embodiment the monosaccharide is glucose, galactose, dextrose, fructose or any combination hereof. In yet another embodiment the disaccharide is maltose, sucrose, lactose or any combination hereof.

The water activity of the filling composition may vary. Thus, in an embodiment the filling composition has a water activity below 0.6, such as below 0.4, such as below 0.3 and such as in the range 0.1-0.3. Since water activity reflects water content it often also reflects the viscosity of the products. Thus, an increased water activity may result in a lowered viscosity. Water activity or a_{w} is a measurement of water content. It is defined as the vapor pressure of a liquid divided by that of pure water at the same temperature; therefore, pure distilled water has a water activity of exactly one. As the temperature increases a_{w} typically increases, except in some products with crystalline salt or sugar. At a_{w}-values above 0.65 crunchy products traditionally looses crunchyness. Higher aw substances tend to support more microorganisms that may destroy the product. Bacteria usually require at least 0.91, and fungi at least 0.7. Water activity is measured according to the AOAC method 978.18 and performed at 25°C, after equilibrium is reached, using a HygroLab instrument from Rotronic.

Humectants are often added to products which are to be in a dry or semi-dry state. Thus, in an embodiment the filling composition does not comprise a humectant. Supplementary ingredients of the filling composition include vitamins and minerals, preservatives such as tocopherol, and emulsifiers, such as lecithin, protein powders, cocoa solid, alkylresorcinols, phenolics and other active ingredients, such as DHA, caffeine, and prebiotics.

In a further embodiment the filling composition has a fat content in the range of 15-60% (w/w), such as 20-60% (w/w), such as 25-50% (w/w), such as 20-40% (w/w), such as 30-40% (w/w), or such as 25-35% (w/w) by weight of the filling composition. The amount of fat may vary depending on the type of product. Fat components are preferably vegetable fats such as cocoa butter, rapeseed oil, sunflower oil or palm oil, preferably not hydrogenated.

In yet an embodiment the filling composition may have a salt content in the range 0-2% by weight of the filling composition. In a more specific embodiment the salt is sodium chloride.

Depending on the specific type of filling composition, different types of ingredients may be supplemented to the filling composition. Thus, in an embodiment the filling composition further comprises a milk component, a flavor component, a cheese component, a whole grain component a fruit pulp, fruit puree, sugar syrup, whole grains or any combination thereof. In a further embodiment the flavor component is selected from the group consisting vanilla, honey, or fruit such as strawberry, blueberry, blackberry, raspberry or peach, ground or tree nuts such as hazelnut or peanuts, chocolate, cocoa, and caramel.

In yet an embodiment the milk is selected from the group consisting of whole milk, whey fractions, casein, soya milk and any combination thereof. Addition of a milk component may improve factors such as taste, viscosity and the nutritional profile.

For the aspect of providing the product of the present invention a process is provided for preparing a filling composition, said process comprising:
- preparing a hydrolyzed whole grain composition, comprising the steps of:
   a) contacting a whole grain component with an enzyme composition in water, the enzyme composition comprising at least one alpha-amylase and a protease, said enzyme composition showing no hydrolytic activity towards dietary fibres and the composition does not comprise a beta-amylase,
   b) allowing the enzyme composition to react with the whole grain component, to provide a whole grain hydrolysate,
   c) providing the hydrolyzed whole grain composition by inactivating said enzymes when said hydrolysate has reached a viscosity comprised between 50 and 5000 mPa.s, when measured at 65 deg C and 50 rpm, after 10 mins stirring;
providing the filling composition by mixing the hydrolyzed whole grain composition with a fat content above 15% by weight of the filling composition.

The enzyme composition further comprises a protease or fragment thereof, which protease or fragment thereof shows no hydrolytic activity towards dietary fibres when in the active state. Similar, the enzyme composition may comprise an amyloglucosidase and/or and glucose isomerase according to the present invention.

Several parameters of the process may be controlled to provide the filling composition for use in the invention. Thus, in an embodiment step 1b) is performed at 30-100°C, preferably 50 to 85°C. In a further embodiment step 1b) is performed for 1 minute to 24 hours, such as 1 minute to 12 hours, such as 1 minute to 6 hours, such as 5-120 minutes. In yet an embodiment step 1b) is performed at 30-100°C for 5-120 minutes.

In yet a further embodiment step 1c) is allowed to proceed at 70-150°C for at least 1 second, such as 1-5 minutes, such as 5-120 minutes, such as 5-60 minutes. In an additional embodiment step 1c) is performed by heating to at least 90°C for 5-30 minutes.

A quality parameter of the filling composition and an important parameter in respect of the product processability is the viscosity of the hydrolysed whole grain composition. In the present context the term "viscosity" is a measurement of "thickness" or fluidability of a fluid. Thus, viscosity is a measure of the resistance of a fluid which is being deformed by either shear stress or tensile stress. If not indicated otherwise viscosity is given as mPa.s.

Viscosity may be measured using a Rapid Visco Analyser from Newport Scientific. The Rapid Visco Analyser measures the resistance of the product to the stirring action of a paddle. The viscosity is measured after 10 minutes stirring, at 65°C and 50 rpm.
has reached a viscosity comprised between 50 and 4000 mPa.s, such as between 50 and 3000 mPa.s, such as between 50 and 1000 mPa.s, such as between 50 and 500 mPa.s. In an additional embodiment viscosity is measured at TS 50.

In another embodiment the the hydrolyzed whole grain composition in step 1) is provided when said hydrolysate has reached a total solid content of 25-60%. By controlling viscosity and solid content the hydrolyzed whole grain may be provided in different forms.

In an additional embodiment the hydrolyzed whole grain component in step 1c) is provided in the form of a liquid, a concentrate, a powder, a juice or a puree. An advantage of having hydrolyzed whole grain composition in different forms is that when used in a food product dilution may be avoided by using a dry or semi dry form. Similarly, if a more moisten product is desirable, a hydrolyzed whole grain composition in a liquid state may be used.

The above parameters can be adjusted to regulate the degree of starch degradation, the sugar profile, the total solid content and to regulate the overall organoleptic parameters of the final product.

To improve the enzymatic processing of the whole grain component it may be advantageous to process the grains before the enzymatic treatment.

By milling the grains a larger surface area is made accessible to the enzymes, thereby speeding up the process. In addition the organoleptic parameters may be improved by using a smaller particle size of the grains. In an additional embodiment the whole grains are roasted or toasted before or after enzymatic treatment. Roasting and toasting may improve the taste of the final product.

To prolong the storage time of the product several treatments can be performed. Thus, in an embodiment the process further comprises at least one of the following treatments: UHT, pasteurization, thermal treatment, retort and any other thermal or non-thermal treatments, such as pressure treatment. In a further embodiment the filling composition is applied to an enclosure under aseptic conditions. In yet an embodiment the filling composition is applied to an enclosure under non-aseptic conditions, such as by retort or hot-for-hold.

The filling composition for use in the invention is part of a composite food product. Thus, an aspect of the invention relates to a composite product comprising a filling composition. In an embodiment the composite product is selected from the group consisting of a composite sandwich, a composite biscuit, a composite wafer, a composite fruit snack and composite pastries

It should be noted that embodiments and features described in the context of one of the aspects or embodiments of the present invention also apply to the other aspects of the invention.

The invention will now be described in further details in the following non-limiting examples.

### EXAMPLES

### Example 1 - Preparation of a hydrolyzed whole grain composition

Enzyme compositions comprising Validase HT 425L (alpha-amylase) optionally in combination with Alcalase 2.4 L (protease) were used for the hydrolysis of wheat, barley and oats.

Mixing may be performed in a double jacket cooker, though other industrial equipment may be used. A scraping mixer works continuously and scraps the inner surface of the mixer. It avoids product burning and helps maintaining a homogeneous temperature. Thus enzyme activity is better controlled. Steam may be injected in the double jacket to increase temperature while cold water is used to decrease it.

In an embodiment, the enzyme composition and water are mixed together at room temperature, between 10 and 25°C. At this low temperature, the enzymes of the enzyme composition have a very weak activity. The whole grain component is then added and the ingredients are mixed for a short period of time, usually less than 20 minutes, until the mixture is homogeneous.

The mixture is heated progressively or by thresholds to activate the enzymes and hydrolyse the whole grain component.

Hydrolysis results in a reduction of the viscosity of the mixture. When the whole grain hydrolysate has reached a viscosity comprised between 50 and 5000 mPa.s measured at 65°C and e.g. a total solid content of 25 to 60% by weight, the enzymes are inactivated by heating the hydrolysate at a temperature above 100°C, preferably by steam injection at 120°C.

Enzymes are dosed according to the quantity of total whole grain. Quantities of enzymes are different depending on the type of whole grain component, as protein rates are different. The ratio water/whole grain component can be adapted according to required moisture for the final liquid whole grain. Usually, the water/whole grain component ratio is 60/40. Percents are by weight.

| Hydrolysed whole wheat | |
|---|---|
| Whole wheat flour | Substrate |
| Enzyme amylase | 0.10% based on the substrate |
| Enzyme protease | 0.05% based on the substrate |

| Hydrolysed whole barley | |
|---|---|
| Whole barley flour | Substrate |
| Enzyme amylase | 0.10% based on the substrate |
| Enzyme protease | 0.05% based on the substrate |

| Hydrolysed whole oats | |
|---|---|
| Whole oat flour | Substrate |
| Enzyme amylase | 0.10% based on the substrate |
| Enzyme protease | 0.05% based on the substrate |

### Example 2 - Sugar profile of the hydrolyzed whole grain composition

Hydrolyzed whole grain compositions comprising wheat, barley and oats were prepared according to the method in example 1.

### Carbohydrates HPAE:

The hydrolyzed whole grain compositions were analysed by HPAE for illustrating the sugar profile hydrolysed whole grain composition.

Carbohydrates are extracted with water, and separated by ion chromatography on an anion exchange column. The eluted compounds are detected electrochemically by means of a pulsed amperometric detector and quantified by comparison with the peak areas of external standards.

### Total dietary fibres:

Duplicate samples (defatted if necessary) are digested for 16 hours in a manner that simulates the human digestive system with 3 enzymes (pancreatic alpha-amylase, protease, and amyloglucosidase) to remove starch and protein. Ethanol is added to precipitate high molecular weight soluble dietary fibre. The resulting mixture is filtered and the residue is dried and weighed. Protein is determined on the residue of one of the duplicates; ash on the other. The filtrate is captured, concentrated, and analyzed via HPLC to determine the value of low molecular weight soluble dietary fibre (LMWSF).

### Whole wheat:

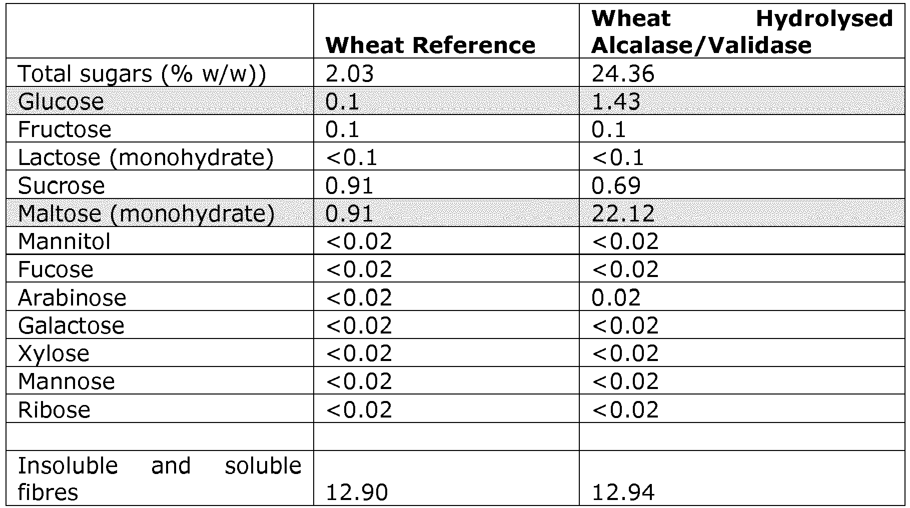

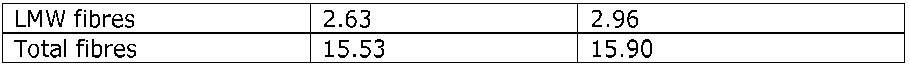

### Whole oats:

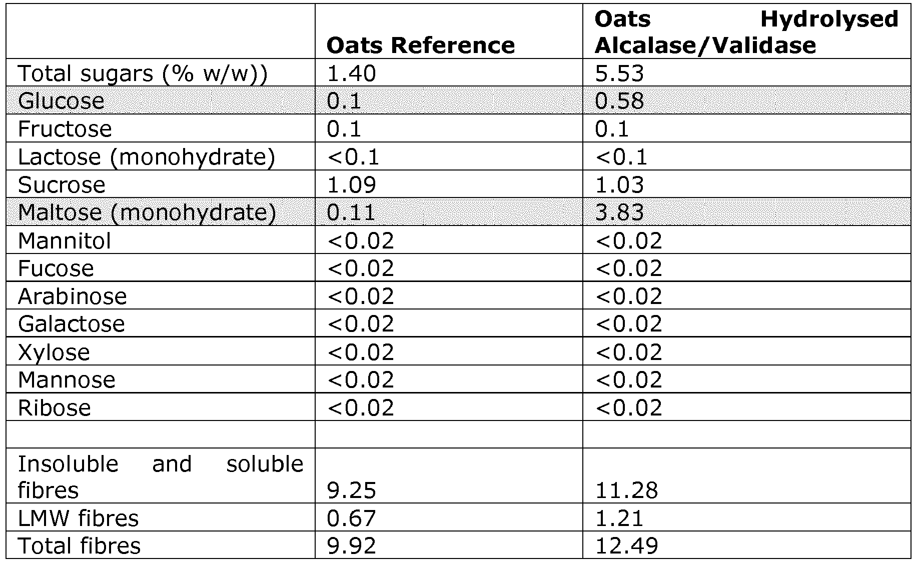

### Whole Barley:

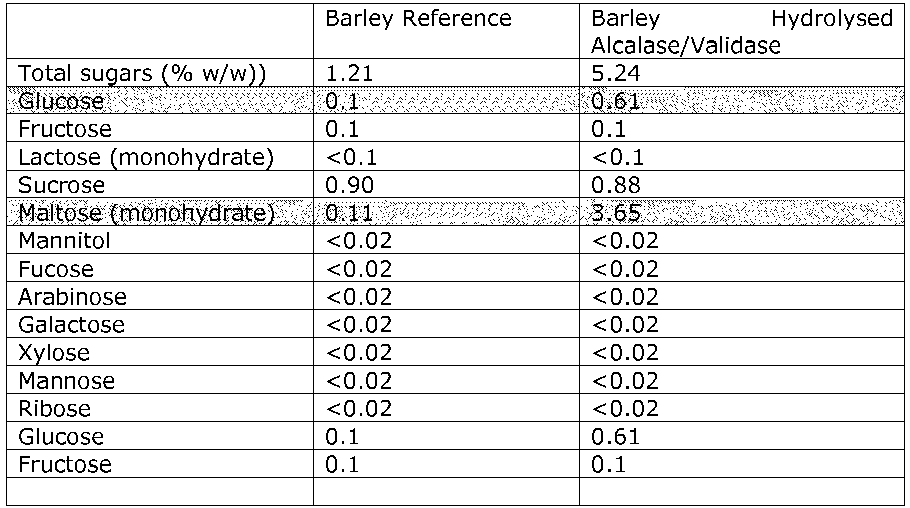

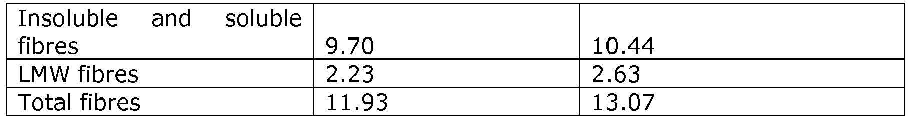

The results clearly demonstrate that a significant increase in the glucose content is provided by the hydrolysis where the glucose content of the hydrolysed barley is 0.61% (w/w) on a dry matter basis; the glucose content of the hydrolysed oat is 0.58% (w/w) on a dry matter basis; and the glucose content of the hydrolysed wheat is 1.43% (w/w) on a dry matter basis.

Furthermore, the results also demonstrates that the maltose:glucose ratio is ranging from about 15:1 to about 6:1.

Thus, based on these results a new sugar profile is provided having a increased sweetness compared to the prior art.

In conclusion, an increased sweetness may be obtained by using the hydrolyzed whole grain composition according to the invention and therefore the need for further sweetening sources may be dispensed or limited.

In addition, the results demonstrate that the dietary fiber content is kept intact and the ratio and amount of soluble and insoluble fibres are substantially the same in the non-hydrolyzed whole grain and in the hydrolyzed whole grain composition.

### Example 3 - Hydrolytic activity on dietary fibres

The enzymes Validase HT 425L (Valley Research), Alcalase 2.4L (Novozymes) and BAN (Novozymes) were analysed using a thin layer chromatography analysis for activity towards arabinoxylan and beta-glucan fibre extracts both components of dietary fibres of whole grain.

The results from the thin layer chromatography analysis showed that the amylase Validase HT and the protease Alcalase showed no hydrolytic activity on either beta-glucan or arabinoxylan, while the commercial alpha-amylase preparation, BAN, causes hydrolysis of both the beta-glucan and arabinoxylan, see figure 1.

See also example 4.

### Example 4 - Oat β-G/ucan and Arabinoxylan molecular weight profile following enzymatic hydrolysis

### Hydrolysis:

A solution of 0.5 % (w/v) of Oat β-Glucan medium viscosity (Megazyme) or Wheat Arabinoxylan medium viscosity (Megazyme) was prepared in water.

The enzyme was added at an enzyme to substrate ratio (E/S) of 0.1 % (v/v). The reaction was allowed to proceed at 50°C for 20 minutes, the sample was then placed at 85°C during 15 min to enable starch gelatinization and hydrolysis. The enzymes were finally inactivated at 95°C for 15 minutes. Different batches of the following enzymes have been evaluated.

| | |
|---|---|
| Alcalase 2.4L (Valley Research): | batch BN 00013 |
| | batch 62477 |
| | batch 75039 |
| Validase HT 425L (Valley Research): | batch RA8303A |
| | batch 72044 |
| MATS L (DSM): | batch 408280001 |

### Molecular weight analysis

Hydrolyzed samples were filtered on a syringe filter (0.22 µm) and 25 µL were injected on a High Pressure Liquid Chromatography Agilent 1200 series equipped with 2 TSKgel columns in serie (G3000PWXL 7,8 x 300 mm), (GMPWXL 7,8X 30 mm) and with a guard column (PWXL 6 x 44 mm). (Tosoh Bioscence) Sodium Nitrate 0.1M/ at 0.5ml/min was used as running buffer. Detection was done by reflective index measurement.

### Results

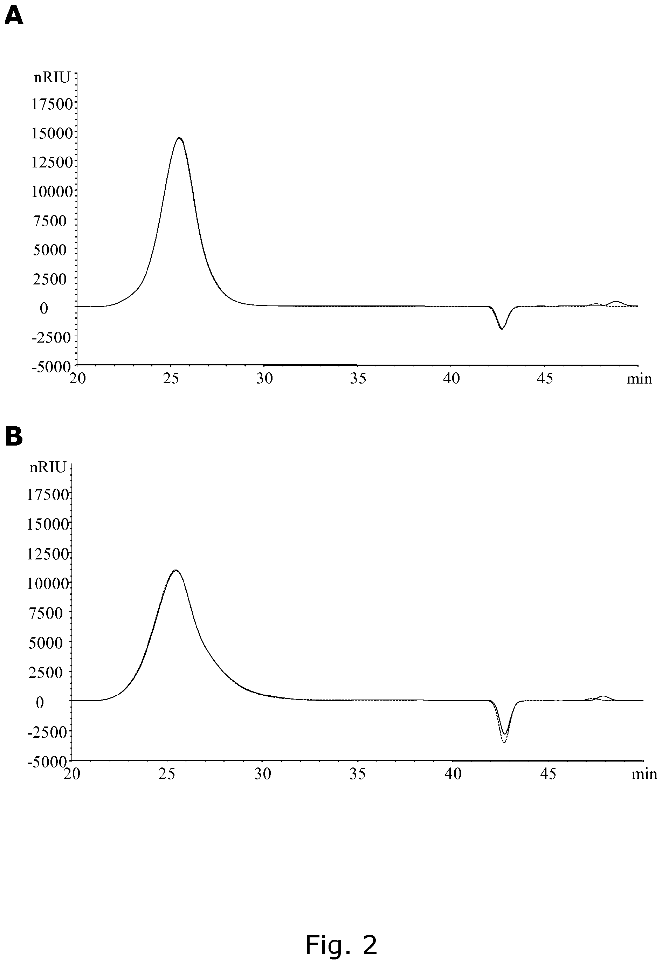

On figures 2-4 graphs for both a control (no enzyme) and test with enzymes are plotted. However, since there are substantially no difference between the graphs it may be difficult to differentiate both graphs from each other.

### Conclusions

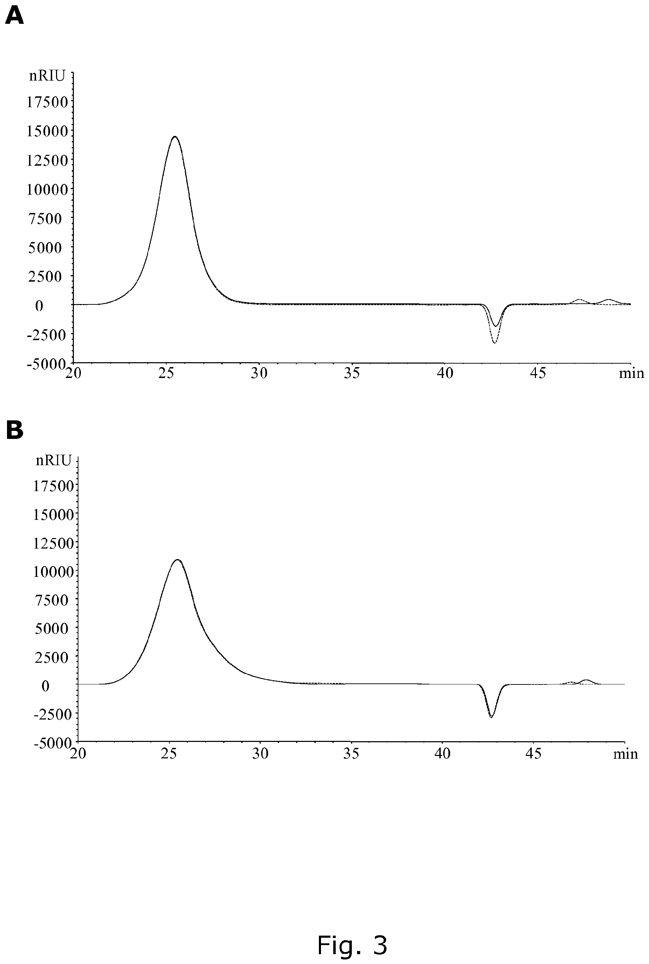

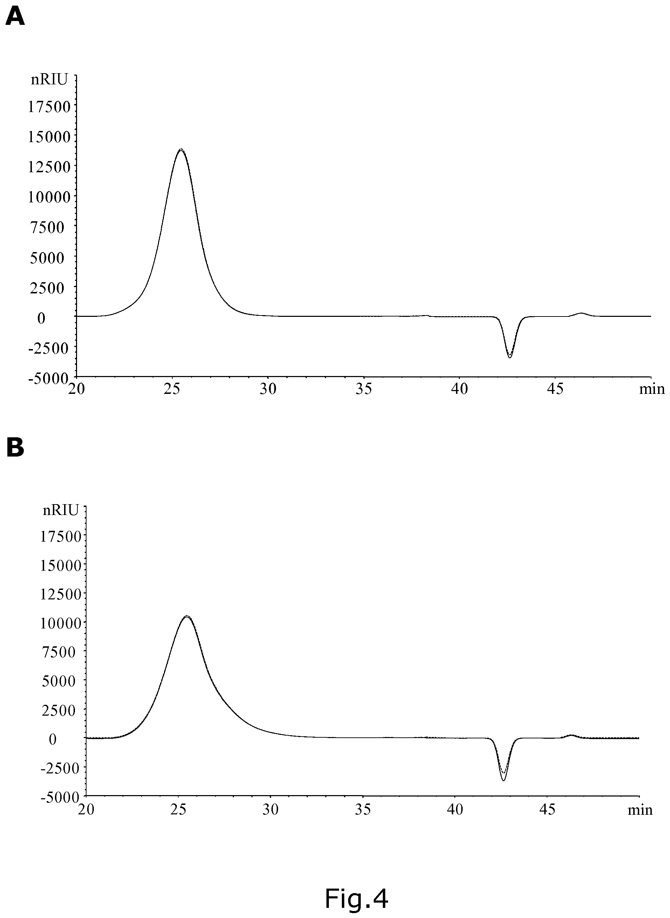

No shift in oat beta glucan and wheat arabinoxylan fibre molecular weight profile was determined following hydrolysis with the Alcalase 2.4 L (figure 2), Validase HT 425 L (figure 3) or MATS L (figure 4).

### Example 5 - Preparation of filling compositions comprising hydrolysed wholegrain composition

The hydrolyzed whole grain composition is provided according to example 1.
The hydrolyzed whole grain composition, in powder form, may be used in replacement of the sugar, one part of sugar may be replaced by one part of hydrolyzed whole grain composition.

The level of replacement is done according to the sensory results based on the following basic recipe:

| **Ingredient Name** | **Mass (%)** |
|---|---|
| Fat | 30.000 |
| Sugar powder | 52.000 |
| Lecithiin Soya | 0.077 |
| Milk powder | 7.000 |
| Cocoa Powder | 10.000 |
| Flavor | 0.923 |
| | |
| Filling composition | 100.000 |

## Claims

1. A composite product comprising a filling composition comprising
- a fat content above 15% by weight of the filling composition; and
- a hydrolyzed whole grain composition which is enzymatically digested whole grain components or a whole grain component digested by using at least an alpha-amylase, which alpha-amylase shows no hydrolytic activity towards dietary fibres when in the active state and a protease, which protease shows no hydrolytic activity towards dietary fibres when in the active state, wherein the whole grain component or components comprise the germ, the endosperm and the bran of grain, the hydrolyzed whole grain composition has a beta-glucan structure at least 95% intact relative to the starting material and which has an arabinoxylan structure at least 95% intact relative to the starting material;
- and the hydrolyzed whole grain composition is prepared by a process comprising the steps of:
a) contacting a whole grain component with an enzyme composition in water, the enzyme composition comprising at least one alpha-amylase and a protease, said enzyme composition showing no hydrolytic activity towards dietary fibres and the composition does not comprise a beta-amylase,
b) allowing the enzyme composition to react with the whole grain component, to provide a whole grain hydrolysate,
c) providing the hydrolyzed whole grain composition by inactivating said enzymes when said hydrolysate has reached a viscosity comprised between 50 and 5000 mPa.s, when measured at 65 deg C and 50 rpm, after 10 mins stirring; and
- the filling composition is provided by mixing the hydrolyzed whole grain composition with a fat content above 15% by weight of the filling composition and wherein the filling composition has a maltose to glucose ratio below 144:1 by weight of the filling composition.

2. The composite product comprising a filling composition according to claim 1, wherein the filling composition further comprises a milk component, a flavor component, a cheese component, a whole grain component a fruit pulp, fruit puree, sugar syrup, whole grains or any combination thereof.

3. The composite product comprising a filling composition according to any one of the preceding claims, wherein the filling further comprises a protease, at a concentration of 0.001-5% by weight of the total whole grain content, which protease shows no hydrolytic activity towards dietary fibres when in the active state.

4. The composite product comprising a filling composition according to any one of the preceding claims, wherein the filling composition further comprises at least one of an amyloglucosidase or a glucose isomerase or fragments thereof, which amyloglucosidase and glucose isomerase or fragments thereof show no hydrolytic activity towards dietary fibres when in the active state.

5. The composite product comprising a filling composition according to any one of the preceding claims, having a total content of whole grains in the range of 0.1-40% by weight of the filling composition, such as 1-20% by weight of the filling composition, such as 5-20%, such as 5-15%.

6. The composite product comprising a filling composition according to any one of the preceding claims wherein the filling composition has a maltose to glucose ratio by weight of the filling composition below 120:1, such as below 100:1, such as below 50:1, such as below 30:1, such as below 20:1 or such as below 10:1.

7. A process for preparing a composite product comprising a filling composition according to any of claims 1-6, said process comprising:
- preparing a hydrolyzed whole grain composition, comprising the steps of:
a) contacting a whole grain component with an enzyme composition in water, the enzyme composition comprising at least one alpha-amylase and a protease, said enzyme composition showing no hydrolytic activity towards dietary fibres and the composition does not comprise a beta-amylase,
b) allowing the enzyme composition to react with the whole grain component, to provide a whole grain hydrolysate,
c) providing the hydrolyzed whole grain composition by inactivating said enzymes when said hydrolysate has reached a viscosity comprised between 50 and 5000 mPa.s, when measured at 65 deg C and 50 rpm, after 10 mins stirring;
- providing the filling composition by mixing the hydrolyzed whole grain composition with a fat content above 15% by weight of the filling composition.

8. The process according to claim 7, wherein the hydrolyzed whole grain composition in step 1) is provided when the said hydrolysate has reached a total solid content of 25-50%.

9. A composite product comprising a filling composition according to any of claims 1 to 6, wherein the composite product is selected from the group consisting of a composite sandwich, a composite biscuit, a composite wafer, a composite fruit snack and composite pastries.

## Patentansprüche

1. Zusammengesetztes Produkt, umfassend eine Füllungszusammensetzung, die umfasst
- einen Fettgehalt über 15 Gew.-% der Füllungszusammensetzung; und
- eine hydrolysierte Vollkornzusammensetzung, welche enzymatisch aufgeschlossene Vollkornkomponenten sind oder eine Vollkornkomponente ist, die unter Verwendung von mindestens einer alpha-Amylase aufgeschlossen ist, wobei die alpha-Amylase im aktiven Zustand keine hydrolytische Aktivität gegenüber Ballaststoffen zeigt, und eine Protease, wobei die Protease im aktiven Zustand keine hydrolytische Aktivität gegenüber Ballaststoffen zeigt, wobei die Vollkornkomponente oder -komponenten den Keim, das Endosperm und die Kleie von Getreide umfassen, die hydrolysierte Vollkornzusammensetzung eine zu mindestens 95 % intakte Beta-Glucan-Struktur relativ zu dem Ausgangsmaterial aufweist und die eine zu mindestens 95 % intakte Arabinoxylan-Struktur relativ zu dem Ausgangsmaterial aufweist;
- und die hydrolysierte Vollkornzusammensetzung durch ein Verfahren hergestellt wird, das die folgenden Schritte umfasst:
a) Inkontaktbringen einer Vollkornkomponente mit einer Enzymzusammensetzung in Wasser, wobei die Enzymzusammensetzung mindestens eine alpha-Amylase und eine Protease umfasst, wobei die Enzymzusammensetzung keine hydrolytische Aktivität gegenüber Ballaststoffen zeigt, und die Zusammensetzung keine beta-Amylase umfasst,
b) Reagierenlassen der Enzymzusammensetzung mit der Vollkornkomponente, um ein Vollkornhydrolysat bereitzustellen,
c) Bereitstellen der hydrolysierten Vollkornzusammensetzung durch Inaktivieren der Enzyme, wenn das Hydrolysat nach 10 Minuten Rühren eine bei 65 °C und 50 U/min gemessene Viskosität zwischen 50 und 5000 mPa.s erreicht hat; und
- wobei die Füllungszusammensetzung durch Mischen der hydrolysierten Vollkornzusammensetzung mit einem Fettgehalt von über 15 Gew.-% der Füllungszusammensetzung bereitgestellt wird, und wobei die Füllungszusammensetzung ein Verhältnis von Maltose zu Glucose von unter 144:1 nach Gewicht der Füllungszusammensetzung aufweist.

2. Zusammengesetztes Produkt, umfassend eine Füllungszusammensetzung nach Anspruch 1, wobei die Füllungszusammensetzung ferner einen Milchbestandteil, einen Geschmackstoffbestandteil, einen Käsebestandteil, eine Vollkornkomponente ein Fruchtmark, Fruchtpüree, Zuckersirup, Vollkorngetreide oder eine beliebige Kombination davon umfasst.

3. Zusammengesetztes Produkt, umfassend eine Füllungszusammensetzung nach einem der vorstehenden Ansprüche, wobei die Füllung ferner eine Protease in einer Konzentration von 0.001-5 Gew.-% des gesamten Vollkorngehalts, umfasst, wobei die Protease im aktiven Zustand keine hydrolytische Aktivität gegenüber Ballaststoffen aufweist.

4. Zusammengesetztes Produkt, umfassend eine Füllungszusammensetzung nach einem der vorstehenden Ansprüche, wobei die Füllungszusammensetzung ferner mindestens eines von einer Amyloglucosidase oder einer Glucoseisomerase oder Fragmenten davon umfasst, wobei die Amyloglucosidase und die Glucoseisomerase oder Fragmente davon im aktiven Zustand keine hydrolytische Aktivität gegenüber Ballaststoffen zeigen.

5. Zusammengesetztes Produkt, umfassend eine Füllungszusammensetzung nach einem der vorstehenden Ansprüche, das einen Gesamtgehalt an Vollkorngetreide im Bereich von 0,1-40 Gew.-% der Füllmasse aufweist, wie beispielsweise 1-20 Gew.-% der Füllmasse, wie beispielsweise 5-20 %, wie beispielsweise 5-15 %.

6. Zusammengesetztes Produkt, umfassend eine Füllungszusammensetzung nach einem der vorstehenden Ansprüche, wobei die Füllungszusammensetzung ein Verhältnis von Maltose zu Glucose von unter 120:1 nach Gewicht der Füllungszusammensetzung aufweist, wie beispielsweise unter 100:1, wie beispielsweise unter 50:1, wie beispielsweise unter 30:1, wie beispielsweise unter 20:1 und wie beispielsweise unter 10:1.

7. Verfahren zur Herstellung eines zusammengesetzten Produkts, umfassend eine Füllungszusammensetzung nach einem der Ansprüche 1 bis 6, wobei das Verfahren umfasst:
- Herstellen einer hydrolysierten Vollkornzusammensetzung, umfassend die folgenden Schritte:
a) Inkontaktbringen einer Vollkornkomponente mit einer Enzymzusammensetzung in Wasser, wobei die Enzymzusammensetzung mindestens eine alpha-Amylase und eine Protease umfasst, wobei die Enzymzusammensetzung keine hydrolytische Aktivität gegenüber Ballaststoffen zeigt, und die Zusammensetzung keine beta-Amylase umfasst,
b) Reagierenlassen der Enzymzusammensetzung mit der Vollkornkomponente, um ein Vollkornhydrolysat bereitzustellen,
c) Bereitstellen der hydrolysierten Vollkornzusammensetzung durch Inaktivieren der Enzyme, wenn das Hydrolysat nach 10 Minuten Rühren eine bei 65 °C und 50 U/min gemessene Viskosität zwischen 50 und 5000 mPa.s erreicht hat;
- Bereitstellen der Füllungszusammensetzung durch Mischen der hydrolysierten Vollkornzusammensetzung mit einem Fettgehalt von über 15 Gew.-% der Füllungszusammensetzung.

8. Verfahren nach Anspruch 7, wobei die hydrolysierte Vollkornzusammensetzung in Schritt 1) bereitgestellt wird, wenn das Hydrolysat einen Gesamtfeststoffgehalt von 25 bis 50 % erreicht hat.

9. Zusammengesetztes Produkt, umfassend eine Füllungszusammensetzung nach einem der Ansprüche 1 bis 6, wobei das zusammengesetzte Produkt ausgewählt ist aus der Gruppe bestehend aus einem zusammengesetzten Sandwich, einem zusammengesetzten Keks, einer zusammengesetzten Waffel, einem zusammengesetzten Frucht-Snack und zusammengesetzten Backwaren.

## Revendications

1. Produit composite comprenant une composition de remplissage comprenant
- une teneur en matières grasses supérieure à 15 % en poids de la composition de remplissage ; et
- une composition de céréales complètes hydrolysées constituée de composants de céréales complètes digérés enzymatiquement ou d'un composant de céréales complètes digéré en utilisant au moins une alpha amylase, laquelle alpha amylase ne présente aucune activité hydrolytique vis-à-vis de fibres alimentaires lorsqu'elle est à l'état actif et une protéase, laquelle protéase ne présente pas d'activité hydrolytique vis-à-vis de fibres alimentaires lorsqu'elle est à l'état actif, le composant ou les composants de céréales complètes comprenant le germe, l'endosperme et le son de la céréale, la composition de céréales complètes hydrolysées a une structure bêta glucane intacte au moins à 95 % par rapport à la matière brute et qui a une structure arabinoxylane intacte au moins à 95 % par rapport à la matière brute ;
- et la composition de céréales complètes hydrolysées est préparée par un procédé comprenant les étapes de :
a) mise en contact d'un composant de céréales complètes avec une composition enzymatique dans de l'eau, la composition enzymatique comprenant au moins une alpha-amylase et une protéase, ladite composition enzymatique ne présentant pas d'activité hydrolytique vis-à-vis de fibres alimentaires et la composition ne comprenant pas de bêta-amylase,
b) réaction libre de la composition enzymatique avec le composant de céréales complètes, pour obtenir un hydrolysat de céréales complètes,
c) fourniture de la composition de céréales complètes hydrolysées en inactivant lesdites enzymes lorsque ledit hydrolysat a atteint une viscosité comprise entre 50 et 5 000 mPa.s mesurée à 65 °C et 50 tr/min après 10 minutes d'agitation ; et
- la composition de remplissage est fournie en mélangeant la composition de céréales complètes hydrolysées avec une teneur en matières grasses supérieure à 15 % en poids de la composition de remplissage et dans lequel la composition de remplissage a un rapport du maltose au glucose inférieur à 144:1 en poids de la composition de remplissage.

2. Produit composite comprenant une composition de remplissage selon la revendication 1, dans lequel la composition de remplissage comprend en outre un composant de lait, un composant d'arôme, un composant de fromage, un composant de céréales complètes, une pâte de fruits, une purée de fruits, un sirop de sucre, des céréales complètes ou l'une quelconque combinaison de ceux-ci.

3. Produit composite comprenant une composition de remplissage selon l'une quelconque des revendications précédentes, dans lequel le remplissage comprend en outre une protéase, à une concentration de 0,001 à 5 % en poids de la teneur totale en céréales complètes, laquelle protéase ne présente aucune activité hydrolytique vis-à-vis de fibres alimentaires lorsqu'elle est à l'état actif.

4. Produit composite comprenant une composition de remplissage selon l'une quelconque des revendications précédentes, dans lequel la composition de remplissage comprend en outre une ou plusieurs parmi une amyloglycosidase ou une glucose isomérase ou leurs fragments, lesquelles amyloglucosidase et glucose isomérase ou leurs fragments ne présentent pas d'activité hydrolytique vis-à-vis de fibres alimentaires lorsqu'ils sont à l'état actif.

5. Produit composite comprenant une composition de remplissage selon l'une quelconque des revendications précédentes, ayant une teneur totale en céréales complètes dans l'intervalle de 0,1 à 40 % en poids de la composition de remplissage, telle que 1 à 20 % en poids de la composition de remplissage, telle que 5 à 20 %, telle que 5 à 15 %.

6. Produit composite comprenant une composition de remplissage selon l'une quelconque des revendications précédentes, dans lequel la composition de remplissage a un rapport du maltose au glucose inférieur à 120:1 en poids de la composition de remplissage, tel qu'inférieur à 100:1, tel qu'inférieur à 50:1, tel qu'inférieur à 30:1, tel qu'inférieur à 20:1 ou tel qu'inférieur à 10:1.

7. Procédé de préparation d'un produit composite comprenant une composition de remplissage selon l'une quelconque des revendications 1 à 6, ledit procédé comprenant :
- la préparation d'une composition de céréales complètes hydrolysées, comprenant les étapes de :
a) mise en contact d'un composant de céréales complètes avec une composition enzymatique dans de l'eau, la composition enzymatique comprenant au moins une alpha-amylase et une protéase, ladite composition enzymatique ne présentant pas d'activité hydrolytique vis-à-vis de fibres alimentaires et la composition ne comprend pas de bêta-amylase,
b) réaction libre de la composition enzymatique avec le composant de céréales complètes, pour obtenir un hydrolysat de céréales complètes,
c) fourniture de la composition de céréales complètes hydrolysées en inactivant lesdites enzymes lorsque ledit hydrolysat a atteint une viscosité comprise entre 50 et 5 000 mPa.s mesurée à 65 °C et 50 tr/min après 10 minutes d'agitation ;
- fourniture de la composition de remplissage en mélangeant la composition de céréales complètes hydrolysées avec une teneur en matières grasses supérieure à 15 % en poids de la composition de remplissage.

8. Procédé selon la revendication 17, dans lequel la composition de céréales complètes hydrolysées à l'étape 1) est obtenue lorsque ledit hydrolysat a atteint une teneur totale en solides de 25 à 50 %.

9. Produit composite comprenant une composition de remplissage selon l'une quelconque des revendications 1 à 6, dans lequel le produit composite est choisi parmi le groupe constitué par un sandwich composite, un biscuit composite, une tranche composite, un en-cas fruité composite et des pâtisseries composites.
